# EUROPEAN PATENT APPLICATION

(11) **EP 1 669 649 A1**
(43) Date of publication of application: **14.06.2006**
(21) Application number: 05026947.1
(22) Date of filing: 09.12.2005
(51) Int. Cl.: F16K 31/06

(54) **Fluid control valve with angled seal**

(30) Priority: 10.12.2004 US 8897
(71) Applicant: Eaton Corporation, Cleveland, Ohio 44114-2584 (US)
(72) Inventor: Kim, Tae-Kyung, Sterling Heights Michigan 48314 (US)
(74) Representative: Rüger, Barthelt & Abel Patentanwälte

(57) **Abstract**

Apparatus and methods of the invention include fluid control valves (100) and valve assemblies thereof comprising an inlet port (102); a pressure control outlet port (114); an exhaust port (116); and an angled seal (120). Seals of the invention are advantageously angled between the pressure control outlet port (114) and the exhaust port (116) external to body of the valve (100).

## Description

### BACKGROUND

The present disclosure relates to fluid control valves and seals associated therewith.

Many different types of valves are used to control a variety of fluids and in a variety of ways. Depending on the application, fluid flow is controlled in one or more of a variety of ways. Pulse-width-modulated, on/off, and variable pressure a re a few coined manners of controlling fluid flow known to those of skill in the art. To assist in control of fluid flow, solenoid (*i.e*., electrically actuated) valves that include electrical systems are often used due to their ability to efficiently and effectively control fluid flow in a variety of ways.

Solenoid valves are used in many applications. For example, solenoid valves are useful in controlling the flow of hydraulic fluid in, for example, automatic transmission systems of motor vehicles. In automatic transmission systems, shifting of transmission speed ratios is controlled by an electronic controller that provides an electrical signal to the solenoid valve, which then provides a corresponding fluid pressure signal to a pressure responsive actuator for effecting a desired transmission speed ratio change.

Generally, solenoid valves typically include at least a supply port (also referred to as an "inlet port") and a pressure control output port, which provide respective fluid flow to and from a valves housing for operation of an external component in communication therewith. The internal valve mechanics of solenoid valves vary widely within the valve housing.

One particular type of solenoid valve comprises a ball valve having an inlet port, a pressure control outlet port, and an exhaust port through which fluid is discharged to a sump or is returned to rejoin the fluid supply. Such valves provide electrical control of a fluid pressure by controlling the flow of fluid from the inlet port to a valving chamber within the valve housing. The valving chamber in such valves is in communication with the pressure control outlet port. A desired pressure at the pressure control outlet port is maintained by controlling the amount of fluid bleed to the exhaust port. Implicitly, ball valves include a ball disposed in the valving chamber, whereby the ball moves with respect to a valve seat that's adjacent the inlet port. The ball moves via an operating rod mechanism disposed between the ball and a solenoid armature operating in response to an electric signal. In this arrangement, two electrical circuits are typically used - one for opening the valve, and one for closing the valve. Ball valves can provide many advantages over standard solenoid valves, some of which include, for example, higher permissible flow rates, lower resistance to flow resulting in a lower pressure drop across a valve, higher permissible pressure ratings, compatibility with a wide range of media, no minimum pressure requirements (differential pressure), and smoother operation (reducing water hammer).

No matter what type of internal valve mechanics are arranged within the valve housing, exhaust and pressure control outlet ports of fluid control valves, such as solenoid valves, are generally defined in isolation by a seal that is interposed between openings to the two ports on the outer surface of a solenoid valve. Conventionally, such a seal is formed by horizontally stacking installed "o"-rings around the valve housing. Such an arrangement defines isolated ports into and out of the valve housing. When o-rings are stacked in this conventional manner, vertical space required by the valve assembly includes the vertical space accommodating a supported o-ring adjacent to the exhaust port, and the vertical space accommodating a supported o-ring adjacent to the pressure control outlet port. Each o-ring is conventionally supported by associated grooves and similar structures defined within a valve housing outer surface, all of which increase vertical packaging space requirements of such valves.

As consumer-driven demands for tighter packaging and miniaturization of components increases, it is desirable to decrease packaging space requirements of individual components within an overall assembly in order to reduce the size and weight of the assembly. Consumer demands influence, for example, the highly competitive automobile industrial segment. Assembled automobiles and other motorized vehicles typically include multiple solenoid valves, each of which contributes to overall packaging space requirements. T hus, reduction of packaging s pace requirements associated with valves including, for example, solenoid valves is particularly desirable and furthers meeting consumer demands.

### SUMMARY

The present invention facilitates reduced vertical packaging space requirements by use of an angled seal in a fluid control valve. A method of the invention comprises reducing vertical packaging space requirements associated with an assembly utilizing one or more fluid control valves by replacing one or more fluid control valves of the assembly with a corresponding number of fluid control valves of the invention. In this method, the fluid control valves of the assembly lack an angled seal between exterior openings of the pressure control outlet port and the exhaust port.

According to one embodiment of the invention, a fluid control valve comprises an inlet port; a pressure control outlet port; an exhaust port; and an angled seal, wherein the seal is angled between the pressure control outlet port and the exhaust port external to body of the valve. The angled seal comprises any suitable material such as, for example, an o-ring. In a further embodiment, fluid control valves of the invention comprise an annular groove for receipt of the angled seal.

In yet a further embodiment, fluid control valves of the invention comprises multiple openings associated with at least one of the pressure control outlet port and the exhaust port extend circumferentially around only about one-half of the circumference of the valve. For example, multiple openings associated with the pressure control outlet port and multiple openings associated with the exhaust port can be positioned on opposite sides of the angled seal. In another example, an opening associated with the pressure control outlet port and an opening associated with the exhaust port are positioned on opposite sides of the angled seal.

In still a further embodiment, the inlet port of fluid control valves of the invention comprises multiple openings exterior to the valve. Similarly, according to another embodiment, the pressure control outlet port of fluid control valves of the invention comprises multiple openings exterior to the valve. Likewise, according to another embodiment, the exhaust port of fluid control valves of the invention comprises multiple openings exterior to the valve.

Valve assemblies included within the invention include, but are not limited to, ball valves and spool valves. An exemplary valve assembly of the invention comprises a pressure control outlet port; an exhaust port; and a seal disposed at an angle exterior to the valve and between exterior openings of the pressure control outlet port and the exhaust port. According to one aspect of this embodiment, the pressure control outlet port and the exhaust port are vertically spaced at a minimal distance that prevents openings of the pressure control outlet port and the exhaust port from vertically overlapping with respect to a vertical axis through the valve. According to another aspect of this embodiment, the seal vertically overlaps with at least one of the pressure control outlet port or exhaust port openings with respect to a vertical axis through the valve. As an example, the seal can vertically overlaps with both of the pressure control outlet port and exhaust port openings with respect to a vertical axis through the valve.

Although not limited to solenoid valves, an exemplary fluid control valve of the invention comprises a solenoid operating assembly. For example, a solenoid ball valve of the invention comprises an inlet port; a pressure control outlet port; an exhaust port; and an angled seal, wherein the seal is angled between the pressure control outlet port and the exhaust port external to body of the valve.

Fluid control valves and valve assemblies of the invention are useful in a variety of applications. One particular application involves the automotive industry. For example, an automatic transmission system for a motorized vehicle comprises at least one fluid control valve of the invention in one application. In this embodiment, the fluid control valve can provide fluid pressure to a pressure responsive actuator for effecting transmission speed ratio change.

### BRIEF DESCRIPTION OF THE DRAWINGS

FIG. 1 is a cross-section view of a prior art solenoid fluid control valve assembly.

FIG. 2A is a cross-section view of an improved disclosed fluid control valve assembly, illustrated in a closed position.

FIG. 2B is a cross-section view of the fluid control valve assembly of FIG. 2A, illustrated in an open position.

FIG. 3A is an exterior view of the fluid control valve assembly of FIGS. 2A and 2B.

FIG. 3B is an exterior view of the fluid control valve assembly of FIGS. 2A and 2B, viewed perpendicular to the cross-sectional view of FIGS. 2A and 2B and from the side of the valve assembly, having an exterior pressure control outlet port opening.

FIG. 3C is an exterior view of the fluid control valve assembly of FIGS. 2A and 2B, viewed perpendicular to the cross-sectional view of FIGS. 2A and 2B and from the side of the valve assembly, having an exterior exhaust port opening.

FIG. 4A is an exterior view of a further embodiment of a fluid control valve assembly of FIGS. 2A and 2B, viewed perpendicular to the cross-sectional view of FIGS. 2A and 2B and from the side of the valve assembly, having multiple exterior pressure control outlet port openings.

FIG. 4B is an exterior view of the fluid control valve assembly of FIG. 4A, viewed perpendicular to the cross-sectional view of FIGS. 2A and 2B and from the side of the valve assembly, having multiple exhaust port openings.

### DETAILED DESCRIPTION

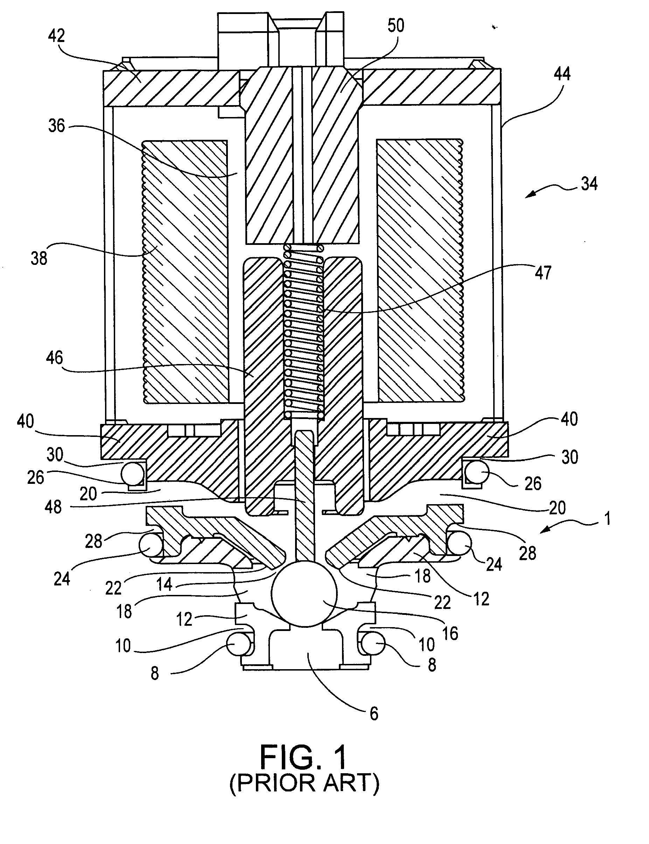

For ease of comparison with the fluid control valves disclosed herein, FIGURE 1 shows a prior art fluid control valve. As can be appreciated, many variations in types of fluid control valves, as well as components included therein and associated geometries, are known. It is not necessary to the practice of the present disclosed fluid control valve, or for understanding of comparative background technology to provide further details about such variations, as one of ordinary skill in the fluid control valve arts can adapt the present disclosure for use with any suitable fluid control valve according to known principles and apparatus.

The prior art valve assembly indicated generally at 1 is encompassed within a solenoid ball valve. No matter how the valve is internally constructed, and how fluid flow is controlled therethrough, fluid control valves generally include at least two ports, and more typically at least three ports, each with one or more external openings.

As shown in FIGURE 1, valve assembly 1 includes an inlet port 6 isolated from other valve ports by a resilient seal ring 8 disposed in an annular groove 10 formed in an outer surface of a valve body 12. In the valve exemplified, the inlet port 6 selectively facilitates fluid flow into an adjacent enlarged diameter bore 14 during operation based on opening and closing of inlet port 6 by respective upward and downward movement of a ball 16 within the valve. The bore 14 provides a passageway within the valve assembly 1 for selective fluid flow between two or more of inlet port 6, pressure control outlet port 18 *(i.e.,* the port through which fluid is discharged to at least one operatively connected component that is at least partially controlled by the solenoid ball valve), and the exhaust port 20 (*i.e*., the port through which fluid is discharged to a sump or is returned to rejoin the fluid supply). The valve assembly 1 is capable of averting or limiting fluid flow to the exhaust port 20 by selective seating of the ball 16 against flanged exhaust seats 22 extending within the bore 14.

As illustrated in FIG. 1, the pressure control outlet port 18 is isolated from the exhaust port 20 and the inlet port 6 by a pair of resilient seal rings 24, 26. The seal rings 24, 26 are disposed in a spaced relationship on opposite sides of the pressure control outlet port 18 and in annular grooves 28, 30 formed in an outer surface of the valve body 12. In this manner, multiple openings typically associated with the pressure control outlet port 18 and the exhaust port 20 (such as the two openings for each of those elements shown in the cross-sectional view of FIG. 1) are isolated from each other external to the valve body 12. Owing to this configuration, fluid flow is permitted to flow only internally to the valve assembly 1 in a controlled manner based on the positioning of the ball 16 within bore 14.

Conventionally, the pressure control outlet port 18 includes multiple openings extending circumferentially a round the valve body 12 for se lective egress of fluid from the valve assembly 1. Likewise, the exhaust port 20 conventionally includes multiple openings extending circumferentially around the valve body 12 for selective egress of fluid from the valve assembly 1. Multiple openings associated with each port are typically spaced approximately equidistant from each other around the entire circumference of a fluid control valve. For example, each port typically includes two openings spaced horizontally 180 degrees apart around the circumference with respect to a vertical axis extending through the valve, as shown in the configuration illustrated in FIG. 1. In many valve assemblies, more than two circumferentially spaced openings (e.g., three, four, five, six, *etc.)* are typical for each type of port (e.g., the pressure control outlet port 18 and the exhaust port 20). While only one opening for the inlet port 6 is illustrated in FIG. 1, it is known that the inlet port 6 can also include more than one opening, all of which facilitate the selective flow of fluid into the valve assembly 1.

Referring again to FIG. 1, a solenoid operating assembly indicated generally at 34 controls movement of the ball 16. The solenoid operating assembly 34 typically includes a coil bobbin 36 with coil wound thereon and received over a lower flux ring 40 (also known as a "flux collector") attached to an upper end of the valve body 12. An upper flux ring 42 (also known as a "flux collector") rests above upper end of bobbin 36. The flux rings 40, 42 and the bobbin 36 are retained adjacent the valve body 12 as an operating assembly encompassed by an outer casing 44.

A moveable armature 46 containing an armature spring 47 is slidably disposed within the upper end of the lower flux ring 40. A working air gap is defined between poll piece 50 and the moveable armature 46. An operating rod 48 is received through the armature 46, secured thereto for movement therewith. The operating rod 48 extends downwardly through the lower flux ring 40. The operating rod 48 extends down into the bore 14 of the valve assembly 1. The lower end of the operating rod 48 operatively engages the ball 16 during operation.

In operation, the normally closed valve assembly 6 shown in FIG. 1 includes a ball 16 sealably seated against the valve housing 12 with a solenoid operator 34 d e-energized. In t his s tate, wherein the inlet port 6 is closed, the pressure control outlet port 18 is open to the exhaust port 20, and thus no pressure signal is provided at the port 16. Upon energization of the solenoid operator 34, the arrangement of the flux rings 40, 42 is such that a pole piece 50 attracts the armature 46. The armature 46 thereby moves up such that the ball 16 moves progressively away from its seated position at the inlet port 6 and closer to the flanged exhaust seats 22. This movement of the ball 16 reduces or eliminates the flow of fluid to the exhaust port 20 and thereby increases pressure to the pressure control outlet port 18. Upon de-energization, the armature 46 moves down to return the ball 16 to a seated position adjacent the inlet port 6.

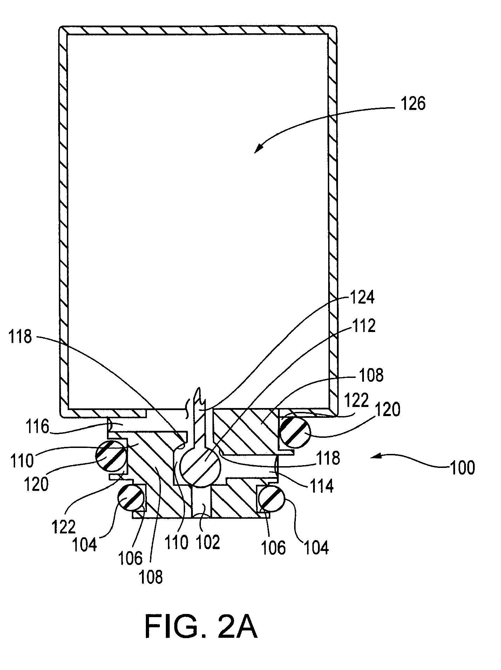

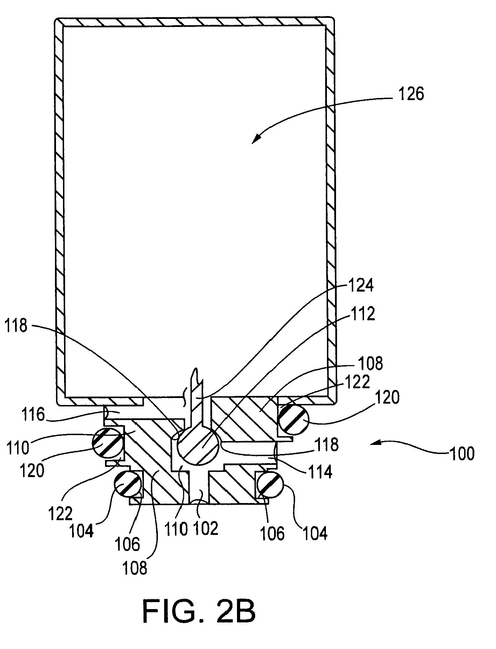

Referring now to FIG. 2A and FIG. 2B, an exemplary embodiment of a valve assembly 100 of the present disclosed fluid control valve is illustrated. Note that components similar to those referenced in the embodiment of FIGS. 2A and 2B may be denoted by the same reference number in a later figure in order to highlight corresponding parts and minimize duplication in the description. Utilizing this format, although they may be identified in later figures, certain components may be described only once with reference to the first figure in which they are shown.

The valve assembly 100 includes an inlet port 102 that is isolated from other valve ports by a resilient seal ring 104 disposed in annular groove 106 formed in an outer surface of the valve body 108. During operation, the inlet port 102 selectively facilitates fluid flow into an adjacent enlarged diameter bore 110 based on the opening and closing of the inlet port 102 by respective upward and downward movement of the ball 112. The bore 110 provides a passageway within the valve assembly 100 for selective fluid flow between two or more of the inlet port 102, a pressure control outlet port 114 *(i.e.,* the port through which fluid is discharged to at least one operatively connected component that is at least partially controlled by the valve), and an exhaust port 116 *(i.e.,* the port through which fluid is discharged to a sump or is returned to rejoin the fluid supply). The valve assembly 100 is capable of averting or limiting fluid flow to the exhaust port 116 by selective seating of the ball 112 against flanged exhaust seats 118 of the valve housing 108 that extend within the bore 110.

In an exemplary embodiment, the pressure control outlet port 114 is isolated from the exhaust port 116 and the inlet port 102 by a single resilient seal ring 120 disposed in a similarly angled annular groove 122. The seal ring 120 provides an angled seal between the pressure control outlet p ort 114 and the exhaust port 116 around an outer surface of the valve body 108. Use of the term "angled" throughout is in reference to a vertical plane extending longitudinally through the valve assembly 100 *(i.e.,* from the inlet port 102 upward through the operating assembly 126 illustrated in FIGS. 2A and 2B) and a horizontal plane orthogonal thereto.

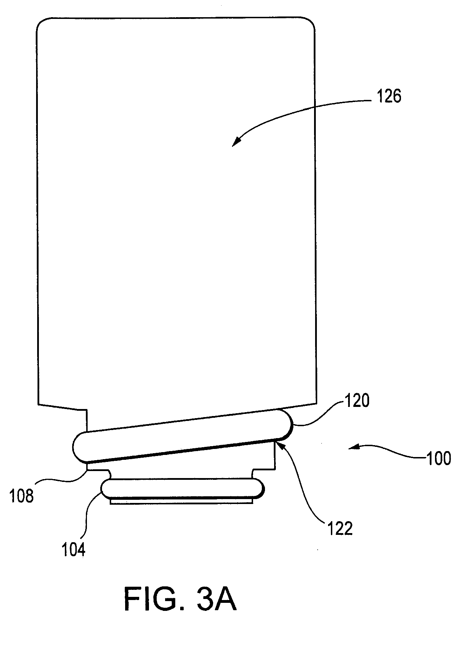

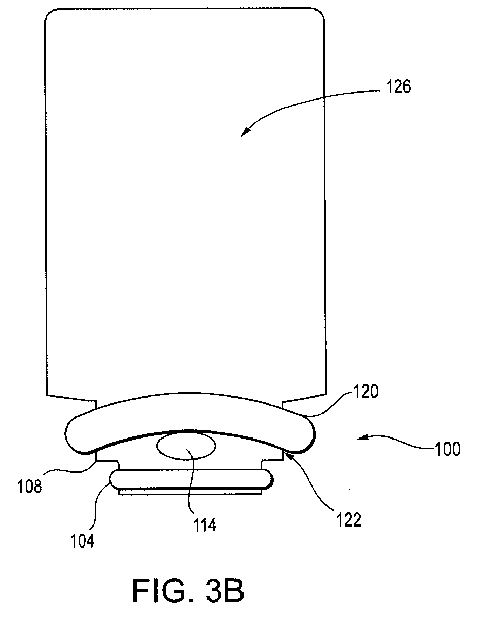

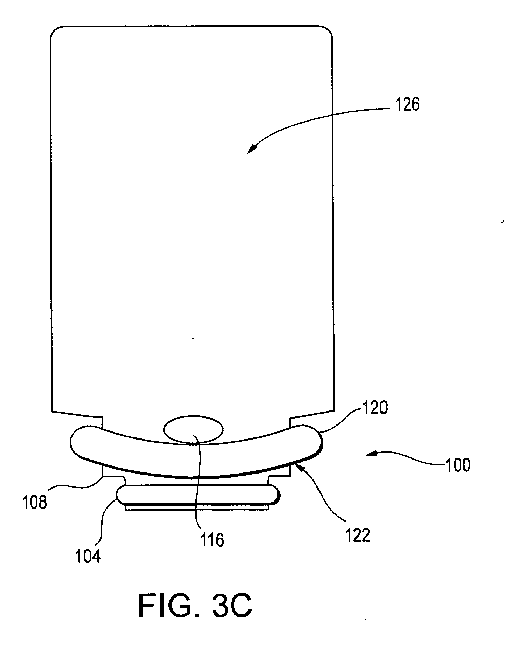

An exterior appearance of the valve assembly 100 is illustrated generally in FIGS. 3A-3C. FIG. 3A illustrates the exterior of valve assembly 100 as taken from the same side of the valve assembly 100 as that illustrated in cross-section in FIGS. 2A and 2B. FIG. 3B illustrates the exterior of the valve assembly 100 taken from a view that is perpendicular to that shown in FIG. 3A, specifically, as viewed from the side of the valve assembly 100 having the pressure control outlet port 114 opening extending therefrom. FIG. 3C is a view perpendicular to that shown in FIG. 3A, as viewed from the side of the valve assembly 100 having the exhaust port 116 opening extending therefrom.

As shown in FIGURE 3A, the seal ring 120 and associated annular groove 122 are angled with respect to their conventional horizontal positioning around an exterior surface of the valve housing 108. In this manner, vertically s paced openings associated with the pressure control outlet port 114 and the exhaust port 116 (shown in FIGURES 3B and 3C) are isolated from each other external to the valve body 108, such that fluid flow is permitted only internal to the valve assembly 100, and in a controlled manner, based upon positioning of the ball 112, or other suitable valve closure mechanism within the bore 110, or other suitable fluid pathway.

Vertical spacing between the openings of the pressure control outlet port 114 and the exhaust port 116 is often necessitated and dictated by the internal mechanics and structure of a fluid control valve. In order to reduce the vertical packaging space requirements associated with a fluid control valve, it is desirable to minimize the vertical distance that prevents openings of the pressure control outlet port 114 and the exhaust port 116 from overlapping with respect to a vertical axis through the valve, when prevention of overlapping is required for effective operation of the valve. If the overlapping of openings is not detrimental to valve operation, vertical spacing is reduced to the minimum vertical spacing needed for effective valve operation.

According to these exemplary embodiments, the seal ring 120 overlaps with at least one of the pressure control outlet port 114 or the exhaust port 116 openings in relation to a vertical axis through the valve 100. In a particularly compact vertically arrangement, for example, the seal ring 120 overlaps with both the pressure control outlet port 114 and the exhaust port 116 openings in relation to a vertical axis through the valve.

As compared to prior art fluid control valves, such as the prior art solenoid ball valve shown in FIG. 1, where openings of the pressure control outlet port 18 and the exhaust port 20 are vertically spaced by a distance including that associated with the thickness of the seal ring 26, and its associated components, including annular groove 30, a substantial reduction in vertical packaging space requirements is possible using the disclosed valve. For example, use of o-rings of about 2 to about 2 ½ millimeters within annular grooves of about 3 millimeters is common in fluid control valves. Supporting annular grooves of 3 millimeters in diameter can require adjacent supports (e.g., plastic supports ― not shown in FIG. 1) of about 1 millimeter each. Thus, vertical packaging space reductions made possible by adapting a valve including such an o-ring as seal ring 26 according to the present disclosed valve are at least 5 millimeters.

In an exemplary embodiment, the seal ring 120 between the pressure control outlet port 114 and the exhaust port 116 is angled with respect to the seal ring 104 adjacent the inlet port 102. It is to be understood, however, that more than one seal ring within the valve can be angled. For example, when the inlet port 102 includes one or more circumferentially positioned openings, a se al r ing between the inlet p ort and the pressure control outlet port 114 may optionally be angled. Although vertical packaging space requirements may not be decreased to the extent made possible by use of only one angled seal ring positioned between the pressure control outlet port 114 and the exhaust port 116, more than one angled seal ring may also be positioned between the pressure control outlet port 114 and the exhaust port 116. If multiple seal rings within a valve are angled, they need not be angled by the same degree. For maximum vertical packaging space reduction, however, it is desirable to position all angled seal rings at the same relative degree of angle with respect to vertical and horizontal planes extending through the valve.

Vertical spacing between openings of the pressure control outlet port 114 and the exhaust port 116 impacts the angle of seal ring 120. Further, the angles at which the seal ring 120 and associated annular groove 122 are positioned can vary depending on the desired effect, as well as internal mechanics of the valve assembly 100, and the dimensions of the individual valve assembly 100 components (e.g., the pressure control outlet port 114, the exhaust port 116, the ball 112, the seal ring 1 20, and other valve components).

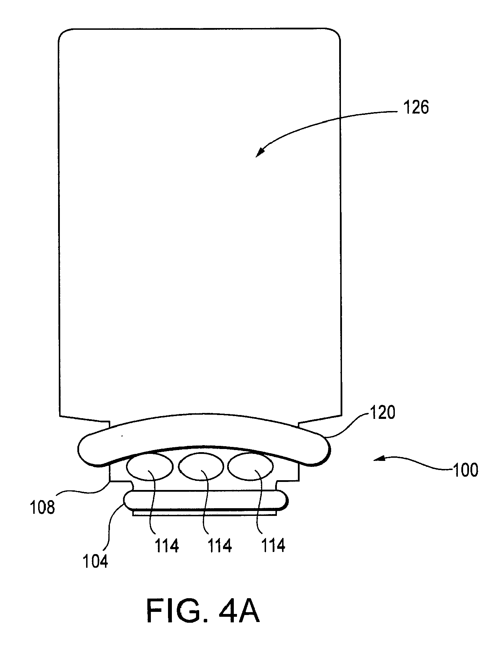

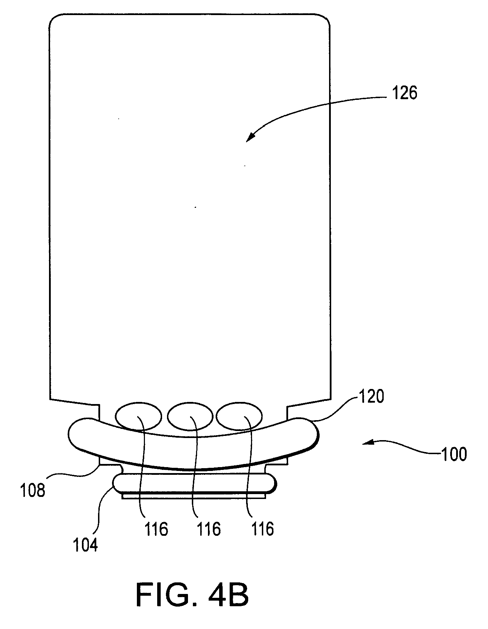

As noted above, each of the individual valve ports within a fluid control valve may include multiple openings exterior to the valve housing 108. However, unlike conventional valves, multiple openings associated with the pressure control outlet port 114 and the exhaust port 116 extend circumferentially around only about one-half of the circumference of the valve body 108 due to the angled positioning of the resilient seal ring 120 between the pressure control outlet port 114 and the exhaust port 116. For example, FIGS. 4A and 4B illustrate an exterior surface of a further embodiment of the disclosed valve, whereby multiple openings are provided for each of the pressure control outlet port 114 and the exhaust port 116. While only one opening for the inlet port 102 is illustrated in FIGS. 2A and 2B, the inlet port 102 can also comprise more than one opening, all of which provide selective flow of fluid into the valve assembly 100.

Operatively engaging the ball 112 is a rod 124 coupled to any suitable operating assembly generally shown in FIGS. 2A and 2B as 126. In an exemplary embodiment, the operating assembly 126 comprises a solenoid operator such as that described with reference to FIG. 1. However, it is to be understood that any suitable operating mechanism can be used with the disclosed improved valve assemblies.

In one embodiment, the seal ring 120 fits within a rectangular-shaped annular groove 122. In another embodiment, the seal ring 120 fits within a semicylindrical annual groove 122. Variations in dimension and shape of the annular groove 122 fall within the scope of the invention. For example, the annular groove 122 may have varying depths as it extends around the circumference of the valve assembly 100. Further, the annular groove 122 may be discontinuous, or lack symmetry, in extending around the circumference of the valve assembly 100. Any convenient annular groove, or similar structure, can be used to maintain the seal ring 120 at a desired angle and position along the outside of the valve housing 108. Such variations fall within the scope of the present invention.

The seal ring 120 can be made from any suitable material. For example, the seal ring 120 can be made from materials including, but not limited to, synthetic rubbers and natural rubbers. For example, buna-N, silicone rubber, and butyl rubber are two generally suitable materials for manufacturing the seal ring 120.

Further, although reference throughout has been made herein to a seal ring, any suitable seal can be used to reliably isolate the exhaust port 116 and the pressure control outlet port 114 external to the valve housing 108. As understood by one of ordinary skill in the art, any seal that reliably prevents leaking between the exhaust port 116 and the pressure control outlet port 114 can function as the seal ring 120, whether or not it is shaped as a continuous ring.

In an exemplary embodiment, the seal ring 120 comprises an O-ring. It is well known to those of ordinary skill in the art that O-rings impart compliancy and resiliency in a seal. Thus, manufacturing tolerances need not be as stringent when using O-rings as compared to when using other seals that are less compliant and resilient. This provides even greater flexibility in the design and manufacture of improved fluid control valves utilizing seals of the present disclosure.

The present disclosed valve assemblies include, but are not limited to, normally closed *(i.e.,* valve assemblies wherein essentially no fluid flow exits the valve assembly via the pressure control outlet port, whether or not fluid flow is allowed into the valve assembly via the inlet port) and normally open (*i.e*., valve assemblies wherein fluid flows into and through the valve assembly via the inlet port and from which fluid flows from the valve assembly via the pressure control outlet port valve assemblies).

An exemplary "normally closed" improved valve assembly 100 is shown in FIGS. 2A and 2B. In operation, the normally closed valve assembly 100 includes the ball 112 sealably seated against the valve housing 108 with the operating assembly 126 in its normal state whereby the rod 124 and the ball 112 are situated in their lower most position within the bore 118 as illustrated in FIG. 2A. In this normal state, where the inlet port 102 is closed, the pressure control outlet port 114 is open to the exhaust port 116; thus, no pressure signal is provided at the port 114. Upon departure from a "normal state", the rod 124 moves upward such that the ball 112 moves progressively away from its seated position at the inlet port 102 and closer to the exhaust seats 118. This action reduces or eliminates the fluid flow to the exhaust port 116 and increases the pressure to the pressure control outlet port 114, as illustrated in FIG. 2B. Upon return to the normal state, the rod 124 moves downward to return the ball 112 to a seated position adjacent the inlet port 102, again as illustrated in FIG. 2A.

The presently disclosed improved valves are advantageously used in many applications. In an exemplary embodiment, the improved valves provide significant reductions in packaging space requirements, particularly those associated with vehicle packaging space. These reductions in packaging space are particularly beneficial when the valves are used in the automobile (and other motorized vehicle) industrial segment. Many subassemblies within motorized vehicles utilize multiple valves for control of many types of fluids therein. For example, one such subassembly is an automatic transmission system. Multiple valves are used in automatic transmission systems to provide a fluid pressure signal to a pressure responsive actuator in response to, e.g., an electric signal for effecting desired transmission speed ratio changes.

Various modifications and alterations of the invention will become apparent to those skilled in the art of fluid control valves without departing from the spirit and scope of the present invention, which is defined by the accompanying claims. The appended claims are to be construed accordingly. For example, while a solenoid ball valve is described in an exemplary embodiment, the disclosed improved valve is applicable to other types of fluid control valves with two vertically spaced valve ports extending therefrom. Other types of fluid control valves are known to those of ordinary skill in the art and include, but are not limited to, spool valves and others. Similarly, suitable fluid control valves in which the invention is useful are not limited to electrically actuated solenoid-type valves, but include for example, valves actuated by pneumatic and other means.

It should also be noted that steps recited in any method claims below do not necessarily need to be performed in the order that they are recited. Those of ordinary skill in the art will recognize variations in performing the steps from the order in which they are recited.

## Claims

1. A fluid control valve (100) comprising:
an inlet port (102);
a pressure control outlet port (114);
an exhaust port (116); and
an angled seal (120),
wherein the seal (120) is angled between the pressure control outlet port (114) and the exhaust port (116) external to body (108) of the valve (100).

2. The fluid control valve (100) of claim 1, wherein the valve (100) comprises a solenoid operating assembly (34).

3. The fluid control valve (100) of claim 1, wherein the valve (100) comprises a ball valve.

4. The fluid control valve (100) of claim 1, wherein the valve (100) comprises a spool valve.

5. The fluid control valve (100) of claim 1, comprising an annular groove (106) for receipt of the angled seal (120).

6. The fluid control valve (100) of claim 1, wherein multiple openings associated with at least one of the pressure control outlet port (114) and the exhaust port (116) extend circumferentially around only about one-half of the circumference of the valve (100).

7. The fluid control valve (100) of claim 6, wherein multiple openings associated with the pressure control outlet port (114) and multiple openings associated with the exhaust port (116) are positioned on opposite sides of the angled seal (120).

8. The fluid control valve (100) of claim 1, wherein an opening associated with the pressure control outlet port (114) and an opening associated with the exhaust port (116) are positioned on opposite sides of the angled seal (120).

9. The fluid control valve (100) of claim 1, wherein the angled seal (120) comprises an o-ring.

10. The fluid control valve (100) of claim 1, wherein the inlet port (102) comprises multiple openings exterior to the valve (100).

11. The fluid control valve (100) of claim 1, wherein the pressure control outlet port (114) comprises multiple openings exterior to the valve (100).

12. The fluid control valve (100) of claim 1, wherein the exhaust port (116) comprises multiple openings exterior to the valve (100).

13. A solenoid ball valve comprising:
an inlet port (102);
a pressure control outlet port (114);
an exhaust port (116); and
an angled seal (120),
wherein the seal (120) is angled between the pressure control outlet port (114) and the exhaust port (116) external to body of the valve.

14. A valve assembly for a fluid control valve (100), comprising:
a pressure control outlet port (114);
an exhaust port (116); and
a seal (120) disposed at an angle exterior to the valve (100) and between exterior openings of the pressure control outlet port (114) and the exhaust port (116).

15. The valve assembly of claim 14, wherein the pressure control outlet port (114) and the exhaust port (116) are vertically spaced at a minimal distance that prevents openings of the pressure control outlet port (114) and the exhaust port (116) from vertically overlapping with respect to a vertical axis through the valve.

16. The valve assembly of claim 14, wherein the seal vertically overlaps with at least one of the pressure control outlet port (114) or exhaust port (116) openings with respect to a vertical axis through the valve.

17. The valve assembly of claim 16, wherein the seal vertically overlaps with the pressure control outlet port (114) and exhaust port (116) openings with respect to the vertical axis through the valve.

18. An automatic transmission system for a motorized vehicle comprising at least one fluid control valve of claim 1.

19. A method of reducing vertical packaging space requirements associated with an assembly utilizing one or more fluid control valves, comprising replacing one or more fluid control valves of the assembly with a corresponding number of fluid control valves (100) of claim 1, wherein the fluid control valves (100) of the assembly lack an angled seal between exterior openings of the pressure control outlet port (114) and the exhaust port (116).
